# EUROPEAN PATENT SPECIFICATION

(11) **EP 3 173 290 B1**
(45) Date of publication and mention of the grant of the patent: **30.01.2019**
(21) Application number: 15465560.9
(22) Date of filing: 26.11.2015
(51) Int. Cl.: B60R 11/04

(54) **CAMERA BRACKET WITH METAL WIRE SPRING**
KAMERAHALTERUNG MIT METALLDRAHTFEDER
SUPPORT DE CAMÉRA AVEC RESSORT EN FIL MÉTALLIQUE

(43) Date of publication of application: 31.05.2017
(73) Proprietor: Continental Automotive GmbH, 30165 Hannover (DE)
(72) Inventor: Gheorghe, Lucian, 300440 Timisoara (RO); Lazar, Adrian-Catalin, 300289 Timisoara (RO)
(74) Representative: Reuter, Andreas

(56) References cited:
- WO-A1-2014/141357
- DE-A1-102006 061 308
- DE-A1-102009 011 614
- DE-B3-102012 011 596

## Description

This application relates to a camera bracket.

A camera is usually mounted onto a vehicle windshield using one bracket. Elastic elements and plate or leaf springs are used for attaching the camera onto the bracket. An example of the elastic elements is a snapper. The plate spring has an elongated body with a rectangular cross-section, wherein the body has one or more parts with an arc shape. The plate springs are produced from plastic or metal material. US20110233248 A1 discloses a carrier device for attaching to a windshield of a motor vehicle. The carrier device has a carrier plate. The carrier plate or segments of the carrier plate are made of plastic and it is intended for carrying a camera or a sensor. One side of the carrier plate is permeated with a glass additive material for attaching to the windshield of the vehicle.

US20120207461 A1 discloses a camera of a vehicle. The camera is located inside the vehicle. The camera has a case and a lens. The lens is exposed at a top face of the case, wherein the top face is opposed to a windshield of the vehicle. The top face has an angular shape bent at a ridge line that passes through the top face. The lens is positioned in the vicinity of the ridge line.

DE 10 2012 011 596 B3 relates to a carrier device for carrying and fixing a housing for at least one of a sensor system, an electronic system, a drive unit or a camera in or on a motor vehicle and discloses a device according to the preamble of claim 1, and a method according to the preamble of claim 12. The carrier device comprises a carrier frame received in an installation opening of the radiator grill that defines an interior to receive an electrical device as well as a locking device including locking legs each having ends to pivotally connect the locking device at a pivot axis to the carrier frame between an unlocked position permitting receipt of the electrical device in the interior, and a locked position locking the electrical device in the interior, and spring clamps configured to exert a force against a surface of the electrical device positioned in the interior of the carrier frame in the locked position.

It is an object of this application to provide an improved camera bracket.

The application provides an improved bracket unit for holding a vehicle sensor.

The vehicle is used for transporting people or goods. The sensor is used for measuring a physical parameter, such as temperature,
light, or movement. One side of the bracket unit is adapted for attached to an interior part of the vehicle. The bracket unit is also adapted for fastening onto the vehicle sensor.

Referring to the bracket unit, it includes a bracket and a metal wire spring.

The bracket includes one or more bracket holders, one or more bracket hook parts, and one or more bracket slot parts.

The metal wire spring includes an elongated body with an essentially circular cross-section. The elongated body includes one or more spring hinge parts, one or more spring bar parts, and one or more spring slot parts.

In detail, the spring hinge part is rotatably attached to the corresponding bracket holder part. This attachment allows the metal wire spring to rotate around or about the bracket holder.

The spring bar part is adapted for being fastened onto the corresponding bracket hook part. The metal wire spring can be rotated such that each spring bar part is fastened onto the corresponding bracket hook part.

In this position, the metal wire spring urges the spring bar part away from the bracket while the spring bar part is held by the corresponding bracket hook part such that the bracket hook part prevents the spring bar part from moving away from the bracket, thereby fastening onto the spring bar part. The spring bar part is thereby fastened onto the corresponding bracket hook part.

The spring slot part and the corresponding bracket slot part are adapted for receiving a projection or a part of the vehicle sensor. They are also adapted for fastening onto the received projection.

The bracket unit provides a vehicle sensor receiving position and a vehicle sensor fastening position.

In the vehicle sensor receiving position, the metal wire spring is positioned such that the spring slot part and the corresponding bracket slot part are positioned for receiving the respective projection of the vehicle sensor.

In the vehicle sensor fastening position, the metal wire spring is positioned such that the spring bar part is fastened onto the corresponding bracket hook part. The spring slot part and the corresponding bracket slot part are positioned for fastening onto the received projection of the vehicle sensor.

The sensor bracket unit provides several benefits.

This sensor bracket unit can be producing using only a few components, namely a metal wire spring and a bracket, which provides a snug fit with a vehicle sensor.

This sensor bracket unit can also be assembled easily on manufacturing lines.

The metal wire spring of the bracket unit can also be produced easily and can be shaped easily while maintaining its physical properties over time, even at high temperatures.

This is different from other camera brackets that use plate springs, which are produced using metal or plastic.

The metal plate springs require high development and high production costs. The metal plate springs are not available off-the-shelf because no agreed standards exist for these plate springs. They are hence produced using customized tooling, which is expensive. Moreover, each camera bracket can have three or four metal plate springs, which lead to longer time for assembling a bracket unit of the camera bracket.

Referring to the plastic plate springs, they require complex tooling to produce, which increases cost of producing these plate springs. Elasticity of these plastic plate springs also tends to deteriorate at high temperatures and to deteriorate over time.

The spring hinge part is often positioned at one end of the metal wire spring for easy design and easy assembly of the bracket unit.

The metal wire spring can also include a spring handle part that is adapted for holding by a user. A user can hold the spring handle part for easily rotating the metal wire spring.

The bracket often includes plastic material for easy production of the bracket.

The metal wire spring is often bent to form an essentially rectangular shape for easier design.

In one implementation, the bracket includes two bracket holder parts while the metal wire spring includes two corresponding spring hinge parts.

The bracket can also include four bracket hook parts while the metal wire spring includes four corresponding spring bar parts.

The bracket can also include four bracket slot parts while the metal wire spring include four corresponding spring slot parts. These four bracket slot parts and these corresponding four spring slot parts are adapted for fastening onto four projections of a vehicle sensor.

The application provides an improved combination of a vehicle sensor case and the above bracket unit in which the vehicle sensor case is fastened onto the bracket unit.

The vehicle sensor case can include a camera unit case or other type of sensor case.

The application provides an improved vehicle. The vehicle includes a combination of a vehicle sensor case and at least one of the above bracket units, wherein the vehicle sensor case is fastened onto the bracket unit and wherein the bracket units is provided for fastening onto an interior part of the vehicle.

The application provides a method for a bracket unit to fastened onto a vehicle sensor. The bracket unit includes a bracket and a metal wire spring.

The method includes a vehicle sensor receiving step and a vehicle sensor fastening step.

Referring to the vehicle sensor receiving step, it comprises a step of rotatably positioning the metal wire spring. In other words, the metal wire spring is rotated and it is positioned at a predetermined angle. This is done such that a spring slot part of the metal wire spring and a corresponding bracket slot part of the bracket are positioned for receiving a respective projection of the vehicle sensor. After this, the vehicle sensor fastening step can be performed.

The vehicle sensor fastening step includes a step of rotatably positioning the metal wire spring such that a spring bar part of the metal wire spring is fastened onto a corresponding bracket hook part of the bracket. The spring slot part and the corresponding bracket slot part are also positioned for fastening onto the respective projection of the vehicle sensor.
- Fig. 1: illustrates a perspective view of an improved camera bracket unit,
- Fig. 2: illustrates parts of a metal wire spring for the bracket unit of Fig. 1,
- Fig. 3: illustrates a perspective view of a camera for fastening onto the bracket unit of Fig. 1,
- Fig. 4: illustrates a perspective view of the bracket unit of Fig. 1 and of the camera of Fig. 2, wherein the camera is placed in a first camera position and the bracket unit is placed in an unlocked position,
- Fig. 5: illustrates a side cross-sectional view of the bracket unit and of the camera of Fig. 4,
- Fig. 6: illustrates a perspective view of the bracket unit of Fig. 1 and of the camera of Fig. 2, wherein the camera is placed in a second camera position and the bracket unit is placed in the unlocked position,
- Fig. 7: illustrates a side cross-sectional view of the bracket unit and of the camera of Fig. 6,
- Fig. 8: illustrates a perspective view of the bracket unit of Fig. 1 and of the camera of Fig. 2, wherein the camera is placed in a third camera position and the bracket unit is placed in the unlocked position,
- Fig. 9: illustrates a side cross-sectional view of the bracket unit and of the camera of Fig. 8,
- Fig. 10: illustrates a perspective view of the bracket unit of Fig. 1 and of the camera of Fig. 2, wherein and the bracket unit is placed in a locked position,
- Fig. 11: illustrates a side cross-sectional view of the bracket unit and of the camera of Fig. 10, and
- Fig. 12: illustrates contact areas between the bracket unit and the camera of Fig. 11.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

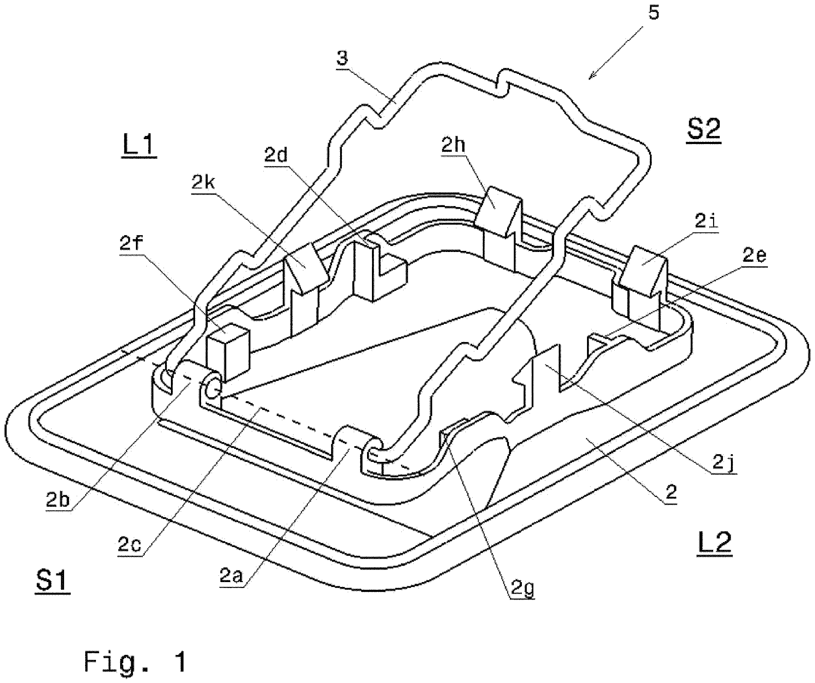

Fig. 1 shows a bracket unit 5 for receiving a camera. The bracket unit 5 includes a plastic bracket 2 with a metal wire spring 3.

The bracket 2 includes an essentially rectangular bracket plate 2p with two opposite long sides L1 and L2 and with two opposite short sides S1 and S2.

The bracket plate 2p also has a first major surface and a second major surface that is placed opposite to the first major surface.

The second major surface is flat and is adapted for attaching to an interior part of a windscreen of a vehicle.

Several projections extend from the first major surface. These projections are placed in an edge area of the first major surface.

In other words, these projections are placed on an outer part of the first major surface. The projections include two bracket spring holder parts 2a and 2b that are aligned to a common axis 2c, four bracket slot parts 2d, 2e, 2f, and 2g, as well as four bracket hook parts 2h, 2i, 2j, and 2k.

In detail, each of the bracket slot parts 2f and 2g includes a rectangular pin with a supporting surface for bearing a force or load that is directed perpendicularly, with respect to the first major surface of the rectangular bracket plate 2p.

Each of the bracket slot parts 2d and 2e includes an L-shaped block. The L-shaped block has a supporting surface for bearing a force that is directed perpendicularly to the first major surface of the rectangular bracket plate 2p. The L-shaped block also has a blocking surface for bearing a force that is directed parallel to the first major surface of the rectangular bracket plate 2p.

The bracket hook part 2k is placed between the bracket slot parts 2d and 2f. The bracket slot parts 2d and 2f and the bracket hook part 2k are located on the first long side L1 of the rectangular bracket plate 2p.

Similarly, the bracket hook part 2j is placed between the bracket slot parts 2e and 2g. The bracket slot parts 2e and 2g and the bracket hook part 2j are located on the second long side L2 of the rectangular bracket plate 2p.

The bracket slot part 2d is placed opposite to the bracket slot part 2e. The bracket hook part 2k is placed opposite to the bracket hook part 2j. The bracket slot part 2f is placed opposite to the bracket slot part 2g.

The bracket spring holder parts 2a and 2b are located on the first short side S1 of the rectangular bracket plate 2p. The bracket hook parts 2h and 2i are located the second short side S2 of the rectangular bracket plate 2p.

The plastic bracket 2 is produced using an injection-moulding method.

Referring to the wire spring 3, it includes an elongated body with an essentially circular cross-section. In short, the wire spring 3 has a shape of a long rod. The wire spring 3 is bent to form a shape mainly of a rectangle with a first long side LS1, a second long side LS2, a first short side SS1, and a second short side SS2. The first long side LS1 is placed opposite to the second long side LS2. Similarly, the first short side SS1 is placed opposite to the second short side SS2.

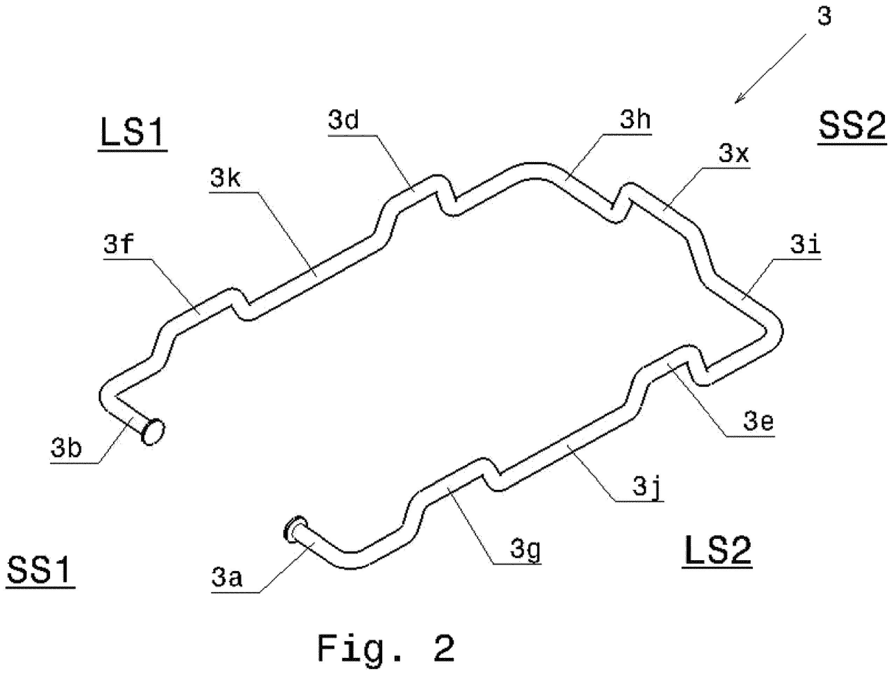

As seen in Fig. 2, the wire spring 3 has several integrally connected portions, namely two spring end parts 3a and 3b, four spring slot parts 3d, 3e, 3f, and 3g, four spring bar parts 3h, 3i, 3j, and 3k, and one spring handle part 3x.

The spring end parts 3a and 3b are placed at two end portions of the wire spring 3. The spring end parts 3a and 3b are located on the first short side SS1 of the rectangle.

The spring handle part 3x is placed between the spring bar parts 3h and 3i. The spring bar parts 3h and 3i as well as the spring handle part 3x are located on the second short side SS2 of the rectangle.

The spring bar part 3k is placed between the spring slot parts 3d and 3f. The spring slot parts 3d and 3f as well as the spring bar part 3k are located on the first long side LS1 of the rectangle.

Likewise, the spring bar part 3j is placed between the spring slot parts 3e and 3g. The spring slot parts 3e and 3g as well as the spring bar part 3j are located on the second long side LS2 of the rectangle.

Comparing the first long side LS1 and the second long side LS2 of the rectangle, the spring slot part 3e is placed opposite to the spring slot part 3d. The spring slot part 3g is placed opposite to the spring slot part 3f. The spring bar part 3j is placed opposite to the spring bar part 3k.

Comparing the first short side SS1 and the second short side SS2 of the rectangle, the spring bar part 3h is placed opposite to the spring end part 3b. The spring bar part 3i is placed opposite to the spring end part 3a.

The spring end part 3a is integrally connected to the spring slot part 3g, which is integrally connected to the spring bar part 3j . The spring bar part 3j is integrally connected to the spring slot part 3e. The spring slot part 3e is integrally connected to the spring bar part 3i, which is integrally connected to the spring handle part 3x. The spring handle part 3x is integrally connected to the spring bar part 3h. The spring bar part 3h is integrally connected to the spring latch part 3d. The spring latch part 3d is integrally connected to the spring bar part 3k. The spring bar part 3k is integrally connected to the spring slot part 3f. The spring slot part 3f is integrally connected to the end part 3b.

The metal wire spring 3 is produced using a metal extrusion process.

Referring to Fig. 1, the spring end parts 3a and 3b are inserted to the corresponding bracket spring holder parts 2a and 2b such that the wire spring 3 is rotatable about the axis 2c. In practise, the wire spring 3 can rotate about 180 degrees about the axis 2c.

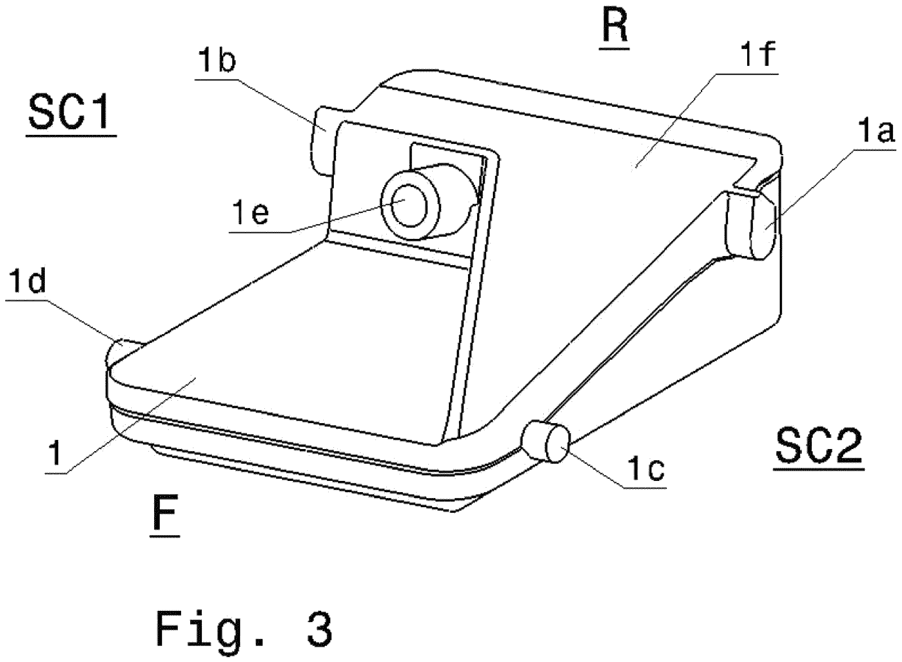

Fig. 3 shows a camera 1. The camera 1 includes a mainly rectangular case 1f. The rectangular case 1f has four sides, namely a first long side SC1, a second long side SC2 that is positioned opposite to the first long side SC1, a front short side F, and a rear short side R that is positioned opposite to the front short side F.

The case 1f also includes with four cylindrical pins 1a, 1b, 1c, and 1d. The cylindrical pins 1a, 1b, 1c, and 1d are positioned on an external surface of the rectangular case 1f.

The cylindrical pins 1b and 1d are located on the first long side SC1 of the rectangular case 1f. Likewise, the cylindrical pins 1a and 1c are located on the second long side SC2 of the rectangular case 1f. The cylindrical pin 1a is placed opposite to the cylindrical pin 1b while the cylindrical pin 1c is placed opposite to the cylindrical pin 1d.

The camera 1 also comprises includes a lens 1e, which is intended for facing the front short side F, which is intended for directed at a driving or moving direction of a vehicle, when the camera is mounted on a windscreen of the vehicle.

In use, the bracket unit 5 is intended for attaching to an interior part of a vehicle, such as windscreen, and for receiving and for fastening onto the camera 1.

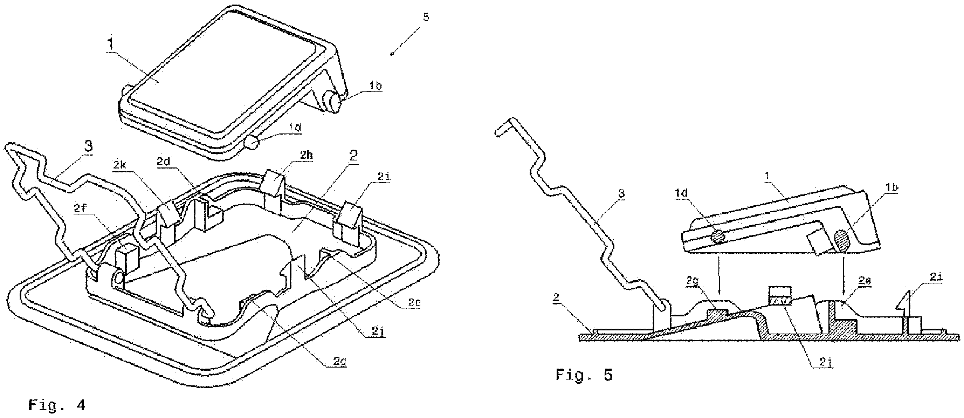

Figs. 4 and 5 show the bracket unit 5 being placed in an unlocked position and the camera 1 being placed in a first camera position.

In the unlocked position, the wire spring 3 is rotated away from the rectangular bracket plate 2p. In detail, a user pushes the spring handle part 3x such that the spring bar parts 3h and 3i of the wire spring 3 are rotated away from the corresponding the bracket hook parts 2h and 2i of the bracket 2.

The wire spring 3 is placed in a relaxed or uncompressed state.

The wire spring 3 and the bracket 2 are also placed to receive the camera 1.

The spring slot part 3f of the wire spring 3 and the bracket slot part 2f of the bracket 2 are positioned to receive the cylindrical pin 1c of the camera 1. Similarly, the spring slot part 3d and the bracket slot part 2d are positioned to receive the cylindrical pin 1a. The spring slot part 3e and the bracket slot part 2e are positioned to receive the cylindrical pin 1b. The spring slot part 3g and the bracket slot part 2g are positioned to receive the cylindrical pin 1d.

This position of the wire spring 3 and the bracket 2 also allow removal of the camera 1 from the bracket unit 5.

In the first camera position, the camera 1 is placed in the vicinity of the bracket 2.

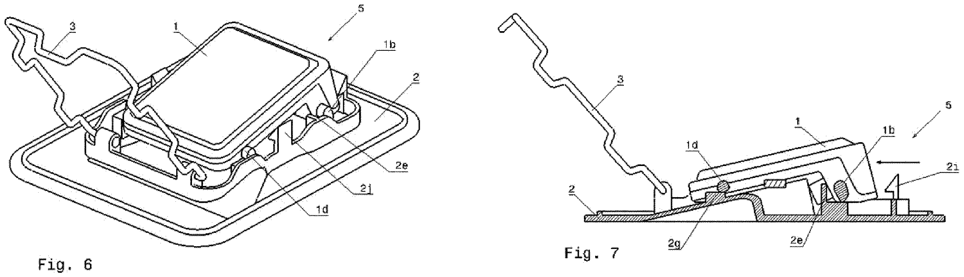

After this, the camera 1 can be placed in a second camera position, which is shown in Figs. 6 and 7.

In the second camera position, the camera 1 is placed next to the bracket 2. The camera 1 contacts the bracket 2, wherein the bracket 2 supports the weight of the camera 1.

In detail, the cylindrical pins 1b, 1c, 1a, and 1d of the camera 1 are placed next to the corresponding bracket slot parts 2e, 2g, 2d, and 2f of the bracket 2. The cylindrical pins 1b, 1c, 1a, and 1d also touches the corresponding bracket slot parts 2e, 2g, 2d, and 2f, wherein the supporting surfaces of the corresponding bracket slot parts 2e, 2g, 2d, and 2f bear the respective weight of the cylindrical pins 1b, 1c, 1a, and 1d.

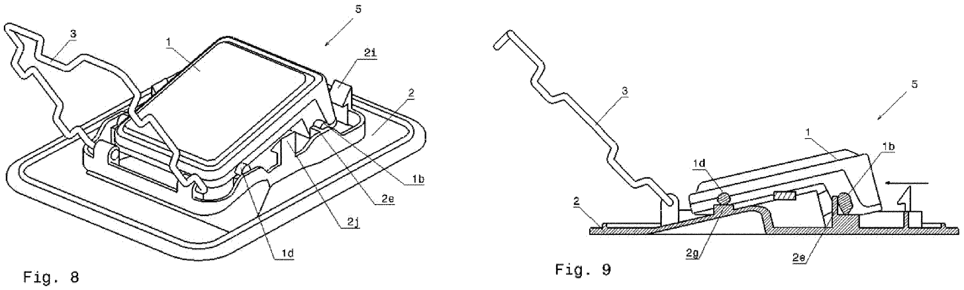

Following this, the camera 1 can be placed in the third position, which is shown in Figs. 8 and 9.

In the third camera position, the camera 1 is placed in a predetermined camera attachment position.

The camera 1 is placed next to the bracket 2 while the camera 1 is pushed toward the bracket spring holder parts 2a and 2b in a direction that is essentially parallel to the major surface of the bracket 2, as shown by an arrow in Fig. 9. The cylindrical pins 1b and 1a are then blocked by the corresponding blocking surfaces of the respective bracket slot part 2e and 2d. This camera 1 is then aligned and is positioned in the predetermined camera attachment position.

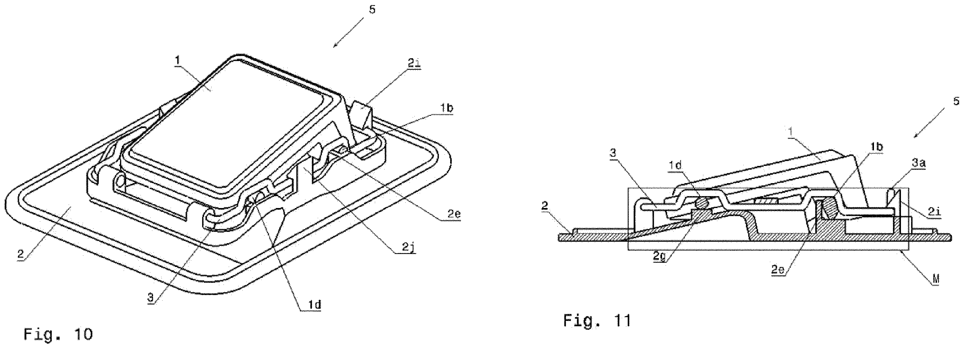

After this, the bracket unit 5 can be placed in a locked position, which is shown in Figs 10 and 11.

In the locking position, the camera 1 is then enclosed by the bracket 2 and the wire spring 4 and is fastened onto the bracket 2 and the wire spring 4.

The wire spring 3 is rotated such that the spring bar parts 3h, 3i, 3k, and 3j of the wire spring 3 are fastened onto the bracket hook parts 2h, 2i, 2k, and 2j of the bracket 2. The spring bar parts 3h, 3i, 3k, and 3j are urged away from the bracket 2 while the bracket hook parts 2h, 2i, 2k, and 2j hold the corresponding spring bar parts 3h, 3i, 3k, and 3j. This holding prevents the spring bar parts 3h, 3i, 3k, and 3j from moving away from the bracket 2.

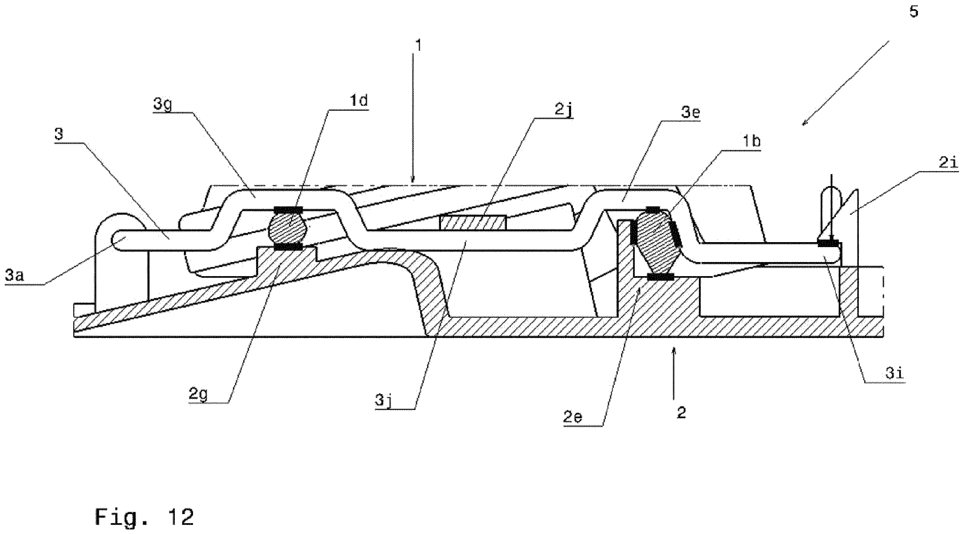

As better seen in Fig. 10, 11, and 12, the cylindrical pin 1c of the camera 1 is enclosed by the spring slot part 3f of the wire spring 3 and by the bracket slot part 2f of the bracket 2, wherein the cylindrical pin 1c is gripped by the spring slot part 3f and by the bracket slot part 2f. In effect, the cylindrical pin 1c is prevented from moving with respect to the spring slot part 3f and to the bracket slot part 2f.

Similarly, the cylindrical pin 1a is also enclosed by the spring slot part 3d and by the bracket slot part 2d, wherein the cylindrical pin 1a is gripped by the spring slot part 3d and the bracket slot part 2d.

The cylindrical pin 1b is also enclosed by the spring slot part 3e and by the bracket slot part 2e, wherein the cylindrical pin 1b is gripped by the spring slot part 3e and the bracket slot part 2e.

The cylindrical pin 1d is also enclosed by the spring slot part 3g and by the bracket slot part 2g, wherein the cylindrical pin 1d is gripped by the spring slot part 3g and the bracket slot part 2g.

The camera 1 is hence prevented from shifting with respect to the bracket 2.

A method of using the bracket unit 5 is described below.

The method includes a bracket assembly step, a camera mounting step, and a camera dismounting step.

In the bracket assembly step, the spring end parts 3a and 3b of the wire spring 3 are inserted to the corresponding bracket spring holder parts 2a and 2b of the bracket 2 such that the wire spring 3 is rotatably connected to the bracket 2.

The flat major surface of the bracket 2 is later attached to a windscreen of a car.

Following this, the camera mounting step can be performed.

In the camera mounting step, the bracket unit 5 is placed in the unlocked position, wherein the bracket unit 5 is positioned to receive the camera 1. The wire spring 3 is rotated away from the rectangular bracket plate 2p and the wire spring 3 is placed in a relaxed state.

The camera 1 is afterward placed next to the bracket 2 such that the cylindrical pins 1b, 1c, 1a, and 1d of the camera 1 are placed next to the corresponding bracket slot parts 2e, 2g, 2d, and 2f of the bracket 2.

Following this, the camera 1 is pushed towards the bracket spring holder parts 2a and 2b, in the direction essentially parallel to the major surface of the bracket 2, for placing the camera 1 in the predetermined camera attachment position.

The bracket unit 5 can later be placed in the locked position, wherein the bracket unit 5 is fastened onto the camera 1. The wire spring 3 is rotated such that the bracket hook parts 2h, 2i, 2k, and 2j hold and fasten onto the corresponding spring bar parts 3h, 3i, 3k, and 3j. The wire spring 3 is then placed in the compressed position.

The camera dismounting step can be performed after this.

In the camera dismounting step, the bracket unit 5 is placed in the unlocked position, wherein the wire spring 3 is rotated away from the rectangular bracket plate 2p and the bracket unit 5 is placed to release the camera 1.

The camera 1 can then be removed from the bracket 2.

In a general sense, other sensors, such as a rain sensor, can replace the camera 1.

The bracket unit 5 provides several benefits.

The metal properties of the metal wire spring 3 allows the wire spring 3 to maintain its elasticity essentially over a long period of time even in high temperatures. In other words, the wire spring 3 can be restored to its original shape after being stretched, even after a long period of use at high temperatures.

The production of the wire spring 3 also does not require complex tools . It can be produced using technology for bending metal wires and pipes.

The design of the bracket 2 is simple.

The bracket unit 5 can align the camera 1 to a predetermined fastening position before the camera is fastened onto the bracket unit 5.

The bracket unit 5 can be produced easily with assembly of only two parts.

The bracket unit 5 can be easily adapted for fastening different types of camera onto a windshield of a car.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

### REFERENCE NUMBERS

- 1: camera
- 1a: cylindrical pin
- 1b: cylindrical pin
- 1c: cylindrical pin
- 1d: cylindrical pin
- 1e: lens
- 1f: case
- 2: bracket
- 2a: bracket spring holder part
- 2b: bracket spring holder part
- 2c: axis
- 2d: bracket slot part
- 2e: bracket slot part
- 2f: bracket slot part
- 2g: bracket slot part
- 2h: bracket hook part
- 2i: bracket hook part
- 2j: bracket hook part
- 2k: bracket hook part
- 2p: bracket plate
- 3: wire spring
- 3a: spring end part
- 3b: spring end part
- 3d: spring slot part
- 3e: spring slot part
- 3f: spring slot part
- 3g: spring slot part
- 3h: spring bar part
- 3i: spring bar part
- 3j: spring bar part
- 3k: spring bar part
- 3x: spring handle part
- 5: bracket unit

- L1: bracket first long side
- L2: bracket second long side
- S1: bracket first short side
- S2: bracket second short side
- F: camera front side
- R: camera rear side
- SC1: camera first side
- SC2: camera second side
- LS1: spring first long side
- LS2: spring second long side
- SS1: spring first short side
- SS2: spring second short side

## Claims

1. A bracket unit (5) for holding a vehicle sensor (1), the bracket unit (5) comprising a bracket (2), the bracket (2) having a first major surface and a flat second major surface adapted for attaching to an interior part of a windscreen of a vehicle, and a metal wire spring (3),
the bracket (2) comprising
- at least one bracket holder (2a, 2b),
- at least one bracket hook part (2h, 2i, 2j, 2k), and
- bracket slot parts (2d, 2e, 2f), and
the metal wire spring (3) comprising an elongated body with an essentially circular cross-section, the body comprising
- at least one spring hinge part being rotatably attached to the at least one bracket holder part,
- at least one spring bar part, and
- at least one spring slot part (3d, 3e, 3f, 3g),
wherein the bracket unit (5) provides a vehicle sensor (1) receiving position and a vehicle sensor fastening position,
- in the vehicle sensor receiving position,
the metal wire spring (3) is positioned such that the spring slot part (3d, 3e, 3f, 3g) and the bracket slot part (2d, 2e, 2f) are positioned for receiving the vehicle sensor (1), and
- in the vehicle sensor fastening position, the metal wire spring (3) is positioned such that the spring bar part (3h, 3i, 3j, 3k) is fastened onto the bracket hook part (2h, 2i, 2j, 2k) and that the spring slot part (3d, 3e, 3f, 3g) and the bracket slot part (2d, 2e, 2f, 2g) are positioned for fastening onto the vehicle sensor (1),
**characterized in that** the bracket slot parts (2d, 2e, 2f, 2g) include two projections extending from the first major surface with L-shaped blocks having a supporting surface for bearing a force that is directed perpendicularly to the first major surface of the bracket (2) and a blocking surface for bearing a force that is directed parallel to the first major surface.

2. The bracket unit (5) according to claim 1, wherein
the spring hinge part is provided at one end of the metal wire spring (3).

3. The bracket unit (5) according to claim 1 or 2, wherein the metal wire spring (3) comprises a spring handle part (3x) that is adapted for holding by a user.

4. The bracket unit (5) according to one of the above-mentioned claims, wherein
the bracket (2) comprises plastic material.

5. The bracket unit (5) according to one of the above-mentioned claims, wherein
the metal wire spring (3) is bent to form an essentially rectangular shape.

6. The bracket unit (5) according to one of the above-mentioned claims, wherein
the bracket (2) comprises two bracket holder parts and the metal wire spring (3) comprises two corresponding spring hinge parts.

7. The bracket unit (5) according to one of the above-mentioned claims, wherein
the bracket (2) comprises four bracket hook parts (2h, 2i, 2j, 2k) and the metal wire spring (3) comprises four corresponding spring bar parts (3h, 3i, 3j, 3k).

8. The bracket unit (5) according to one of the above-mentioned claims, wherein
the bracket (2) comprises four bracket slot parts (3d, 3e, 3f, 3g) and the metal wire spring (3) comprises four corresponding spring slot parts (3d, 3e, 3f, 3g).

9. A combination of a vehicle sensor case and a bracket unit (5) according to one of the above-mentioned claims, wherein the vehicle sensor case is fastened onto the bracket unit (5), **characterized in that**
the vehicle sensor case has at least one cylindrical pin, and that the sensor case is fastened onto the bracket unit (5) in such a way that the at least one cylindrical pin of the sensor case is pressed by the spring slot part (3d, 3e, 3f, 3g) against the supporting surface and against the blocking surface of the L-shaped block of the bracket slot parts (2d, 2e, 2f, 3g) of the bracket (2).

10. The combination according to claim 9, wherein
the vehicle sensor case comprises a camera unit case.

11. A vehicle comprising
a combination of a vehicle sensor case and a bracket unit (5) according to claim 9 or 10,
wherein the vehicle sensor case is fastened onto the bracket unit (5) and the bracket units (5) is provided fastening onto an interior part of the vehicle.

12. A method for a bracket unit (5) to fasten onto a vehicle sensor (1), the bracket unit (5) comprising a bracket (2), the bracket (2) having a first major surface and a flat second major surface adapted for attaching to an interior part of a windscreen of a vehicle, and a metal wire spring (3), the method comprising
a vehicle sensor receiving step and
a vehicle sensor fastening step, wherein
the vehicle sensor receiving step comprises
- positioning the metal wire spring (3) such that a spring slot part (3d, 3e, 3f, 3g) of the metal wire spring (3) and bracket slot parts (2d, 2e, 2f, 2g) of the bracket (2) are positioned for receiving the vehicle sensor (1), and
the vehicle sensor fastening step comprises
- positioning the metal wire spring (3) such that a spring bar part (3h, 3i, 3j, 3k) of the metal wire spring (3) is fastened onto a bracket hook part (2h, 2i, 2j, 2k) of the bracket (2) and that the spring slot part (3d, 3e, 3f, 3g) and the bracket slot parts (2d, 2e, 2f, 2g) are positioned for fastening onto the vehicle sensor (1),
**characterized in that**
the vehicle sensor (1) has a case with at least one cylindrical pin, and that the bracket slot parts (2d, 2e, 2f, 2g) include two projections extending from the first major surface with L-shaped blocks having a supporting surface for bearing a force that is directed perpendicularly to the first major surface of the bracket and a blocking surface for bearing a force that is directed parallel to the first major surface, wherein in the fastened state, the sensor case is fastened onto the bracket unit (5) in such a way that the at least one cylindrical pin of the sensor case is pressed by the spring slot part against the supporting surface and against the blocking surface of the L-shaped block of the bracket slot parts (2d, 2e, 2f, 2g) of the bracket (2).

## Patentansprüche

1. Halterungseinheit (5) zum Halten eines Fahrzeugsensors (1), wobei die Halterungseinheit (5) eine Halterung (2) umfasst, wobei die Halterung (2) eine erste Hauptfläche und eine ebene zweite Hauptfläche aufweist, die so ausgelegt ist, dass sie an einem Innenteil einer Windschutzscheibe eines Fahrzeugs angebracht wird, und eine Metalldrahtfeder (3) umfasst,
wobei die Halterung (2) Folgendes umfasst:
- mindestens eine Halterungsaufnahme (2a, 2b),
- mindestens einen Halterungshakenteil (2h, 2i, 2j, 2k), und
- Halterungsschlitzteile (2d, 2e, 2f), und
wobei die Metalldrahtfeder (3) einen länglichen Körper mit einem im Wesentlichen kreisförmigen Querschnitt umfasst, wobei der Körper Folgendes umfasst:
- mindestens einen Federgelenkteil, der drehbar an dem mindestens einen Halterungsaufnahmeteil angebracht ist,
- mindestens einen Federstegteil, und
- mindestens einen Federschlitzteil (3d, 3e, 3f, 3g), wobei die Halterungseinheit (5) eine Fahrzeugsensor(1)-Aufnahmestellung und eine Fahrzeugsensor-Befestigungsstellung vorsieht,
- in der Fahrzeugsensor-Aufnahmestellung ist die Metalldrahtfeder (3) derart platziert, dass der Federschlitzteil (3d, 3e, 3f, 3g) und der Halterungsschlitzteil (2d, 2e, 2f) zwecks Aufnehmen des Fahrzeugsensors (1) platziert sind, und
- in der Fahrzeugsensor-Befestigungsstellung ist die Metalldrahtfeder (3) derart platziert, dass der Federstegteil (3h, 3i, 3], 3k) an dem Halterungshakenteil (2h, 2i, 2j, 2k) befestigt ist und dass der Federschlitzteil (3d, 3e, 3f, 3g) und der Halterungsschlitzteil (2d, 2e, 2f, 2g) zwecks Befestigung am Fahrzeugsensor (1) platziert sind,
**dadurch gekennzeichnet, dass** die Halterungsschlitzteile (2d, 2e, 2f, 2g) zwei Vorsprünge umfassen, die sich von der ersten Hauptfläche aus mit L-förmigen Blöcken erstrecken, die eine Auflagefläche zum Aufnehmen einer Kraft, die senkrecht zu der ersten Hauptfläche der Halterung (2) gerichtet ist, und eine Sperrfläche zum Aufnehmen einer Kraft aufweisen, die parallel zu der ersten Hauptfläche gerichtet ist.

2. Halterungseinheit (5) nach Anspruch 1, wobei der Federgriffteil an einem Ende der Metalldrahtfeder (3) vorgesehen ist.

3. Halterungseinheit (5) nach Anspruch 1 oder 2, wobei die Metalldrahtfeder (3) einen Federgriffteil (3x) umfasst, der so ausgelegt ist, dass er von einem Benutzer gehalten wird.

4. Halterungseinheit (5) nach einem der zuvor erwähnten Ansprüche, wobei
die Halterung (2) Kunststoffmaterial umfasst.

5. Halterungseinheit (5) nach einem der zuvor erwähnten Ansprüche, wobei
die Metalldrahtfeder (3) gebogen ist und so eine im Wesentlichen rechteckige Form aufweist.

6. Halterungseinheit (5) nach einem der zuvor erwähnten Ansprüche, wobei
die Halterung (2) zwei Halterungsaufnahmeteile umfasst und die Metalldrahtfeder (3) zwei entsprechende Federgelenkteile umfasst.

7. Halterungseinheit (5) nach einem der zuvor erwähnten Ansprüche, wobei
die Halterung (2) vier Halterungshakenteile (2h, 2i, 2j, 2k) umfasst und die Metalldrahtfeder (3) vier entsprechende Federstegteile (3h, 3i, 3j, 3k) umfasst.

8. Halterungseinheit (5) nach einem der zuvor erwähnten Ansprüche, wobei
die Halterung (2) vier Halterungshakenteile (3d, 3e, 3f, 3g) umfasst und die Metalldrahtfeder (3) vier entsprechende Federschlitzteile (3d, 3e, 3f, 3g) umfasst.

9. Kombination aus einem Fahrzeugsensorgehäuse und einer Halterungseinheit (5) nach einem der zuvor erwähnten Ansprüche, wobei das Fahrzeugsensorgehäuse an der Halterungseinheit (5) befestigt ist, **dadurch gekennzeichnet, dass**
das Fahrzeugsensorgehäuse mindestens einen zylindrischen Stift aufweist, und dass das Sensorgehäuse an der Halterungseinheit (5) derart befestigt ist, dass der mindestens eine zylindrische Stift des Sensorgehäuses von dem Federschlitzteil (3d, 3e, 3f, 3g) gegen die Auflagefläche und gegen die Sperrfläche des L-förmigen Blocks der Halterungsschlitzteile (2d, 2e, 2f, 3g) der Halterung (2) gedrückt wird.

10. Kombination nach Anspruch 9, wobei
das Fahrzeugsensorgehäuse ein Kameraeinheit-Gehäuse umfasst.

11. Fahrzeug, umfassend:
eine Kombination aus einem Fahrzeugsensorgehäuse und einer Halterungseinheit (5) nach Anspruch 9 oder 10,
wobei das Fahrzeugsensorgehäuse an der Halterungseinheit (5) befestigt ist und die Halterungseinheiten (5) so vorgesehen ist, dass sie an einem Innenteil des Fahrzeugs befestigt wird.

12. Verfahren für eine Halterungseinheit (5) zum Befestigen an einem Fahrzeugsensor (1), wobei die Halterungseinheit (5) eine Halterung (2) umfasst, wobei die Halterung (2) eine erste Hauptfläche und eine ebene zweite Hauptfläche aufweist, die so ausgelegt ist, dass sie an einem Innenteil einer Windschutzscheibe eines Fahrzeugs angebracht wird, und eine Metalldrahtfeder (3) umfasst, wobei das Verfahren Folgendes umfasst:
einen Fahrzeugsensor-Aufnahmeschritt und
einen Fahrzeugsensor-Befestigungsschritt, wobei der Fahrzeugsensor-Aufnahmeschritt Folgendes umfasst:
- Platzieren der Metalldrahtfeder (3) derart, dass ein Federschlitzteil (3d, 3e, 3f, 3g) der Metalldrahtfeder (3) und Halterungsschlitzteile (2d, 2e, 2f, 2g) der Halterung (2) zwecks Aufnehmen des Fahrzeugsensors (1) platziert sind, und
der Fahrzeugsensor-Befestigungsschritt Folgendes umfasst:
- Platzieren der Metalldrahtfeder (3) derart, dass der Federstegteil (3h, 3i, 3j, 3k) der Metalldrahtfeder (3) an einem Halterungshakenteil (2h, 21, 2j, 2k) der Halterung (2) befestigt ist, und dass der
Federschlitzteil (3d, 3e, 3f, 3g) und die
Halterungsschlitzteile (2d, 2e, 2f, 2g) zwecks
Befestigung am Fahrzeugsensor (1) platziert sind,
**dadurch gekennzeichnet, dass**
der Fahrzeugsensor (1) ein Gehäuse mit mindestens einem zylindrischen Stift aufweist, und dass die Halterungsschlitzteile (2d, 2e, 2f, 2g) zwei Vorsprünge umfassen, die sich von der ersten Hauptfläche aus mit L-förmigen Blöcken erstrecken, die eine Auflagefläche zum Aufnehmen einer Kraft, die senkrecht zu der ersten Hauptfläche der Halterung gerichtet ist, und eine Sperrfläche zum Aufnehmen einer Kraft aufweisen, die parallel zu der ersten Hauptfläche gerichtet ist, wobei im befestigten Zustand das Sensorgehäuse an der Halterungseinheit (5) derart befestigt ist, dass der mindestens eine zylindrische Stift des Sensorgehäuses von dem Federschlitzteil gegen die Auflagefläche und gegen die Sperrfläche des L-förmigen Blocks der Halterungsschlitzteile (2d, 2e, 2f, 2g) der Halterung (2) gedrückt wird.

## Revendications

1. Unité support (5) pour maintenir un capteur de véhicule (1), l'unité support (5) comprenant un support (2), le support (2) ayant une première surface principale et une deuxième surface principale plate conçues pour être attachées à une partie intérieure d'un pare-brise d'un véhicule, et un ressort en fil métallique (3),
le support (2) comprenant
- au moins un logement de support (2a, 2b),
- au moins une partie de crochet de support (2h, 2i, 2j, 2k)
et
- des parties d'emplacement de support (2d, 2e, 2f), et le ressort en fil métallique (3) comprenant un corps allongé avec une section essentiellement circulaire, le corps comprenant
- au moins une partie de charnière à ressort qui est attachée de façon pivotante à l'au moins une partie de logement de support,
- au moins une partie de barrette à ressort, et
- au moins une partie d'emplacement de ressort (3d, 3e, 3f, 3g),
l'unité support (5) fournissant une position de réception de capteur de véhicule (1) et une position de fixation de capteur de véhicule,
- dans la position de réception de capteur de véhicule, le ressort en fil métallique (3) étant positionné de telle sorte que la partie d'emplacement de ressort (3d, 3e, 3f, 3g) et la partie d'emplacement de support (2d, 2e, 2f) sont positionnées pour recevoir le capteur de véhicule (1), et
- dans la position de fixation de capteur de véhicule, le ressort en fil métallique (3) étant positionné de telle sorte que la partie de barrette à ressort (3h, 3i, 3j, 3k) est fixée sur la partie de crochet de support (2h, 2i, 2j, 2k) et de telle sorte que la partie d'emplacement de ressort (3d, 3e, 3f, 3g) et la partie d'emplacement de support (2d, 2e, 2f, 2g) sont positionnées pour être fixées sur le capteur de véhicule (1),
**caractérisée en ce que** les parties d'emplacement de support (2d, 2e, 2f, 2g) incluent deux projections s'étendant de la première surface principale avec des blocs en L ayant une surface de support pour supporter une force qui est dirigée perpendiculairement à une première surface principale du support (2) et une surface de blocage pour supporter une force qui est dirigée parallèlement à la première surface principale.

2. Unité support (5) selon la revendication 1,
la partie de charnière à ressort étant fournie à une extrémité du ressort en fil métallique (3).

3. Unité support (5) selon la revendication 1 ou 2, le ressort en fil métallique (3) comprenant une partie de poignée de ressort (3x) qui est conçue pour la préhension par un utilisateur.

4. Unité support (5) selon l'une des revendications précédentes,
le support (2) comprenant un matériau en plastique.

5. Unité support (5) selon l'une des revendications précédentes,
le ressort en fil métallique (3) étant courbé pour former une forme essentiellement rectangulaire.

6. Unité support (5) selon l'une des revendications précédentes,
le support (2) comprenant deux parties de logement de support et le ressort en fil métallique (3) comprenant deux parties de charnière à ressort correspondantes.

7. Unité support (5) selon l'une des revendications précédentes,
le support (2) comprenant quatre parties de crochet de support (2h, 2i, 2j, 2k) et le ressort en fil métallique (3) comprenant quatre parties de barrette à ressort (3h, 3i, 3j, 3k) correspondantes.

8. Unité support (5) selon l'une des revendications précédentes,
le support (2) comprenant quatre parties d'emplacement de support (3d, 3e, 3f, 3g) et le ressort en fil métallique (3) comprenant quatre parties d'emplacement de ressort (3d, 3e, 3f, 3g) correspondantes.

9. Combinaison d'un boîtier de capteur de véhicule et d'une unité support (5) selon l'une des revendications précédentes, le boîtier de capteur de véhicule étant fixée sur l'unité support (5), **caractérisée en ce que**
le boîtier de capteur de véhicule a au moins une cheville cylindrique, et **en ce que** le boîtier de capteur est fixé sur l'unité de support (5) de telle sorte que l'au moins une cheville cylindrique du boîtier de capteur est pressée par la partie d'emplacement de ressort (3d, 3e, 3f, 3g) contre la surface de support et contre la surface de blocage du bloc en L des parties d'emplacement de support (2d, 2e, 2f, 3g) du support (2).

10. Combinaison selon la revendication 9,
le boîtier de capteur de véhicule comprenant un boîtier d'unité de caméra.

11. Véhicule comprenant
une combinaison d'un boîtier de capteur de véhicule et d'une unité support (5) selon la revendication 9 ou 10,
le boîtier de capteur de véhicule étant fixé sur l'unité support (5) et l'unités support (5) étant fournie avec fixation sur une pièce de l'intérieur du véhicule.

12. Procédé pour une unité support (5) pour être fixée sur un capteur de véhicule (1), l'unité support (5) comprenant un support (2), le support (2) ayant une première surface principale et une deuxième surface principale plate conçues pour être fixées à une partie intérieure d'un pare-brise d'un véhicule, et un ressort en fil métallique (3), le procédé comprenant
une étape de réception de capteur de véhicule et
une étape de fixation de capteur de véhicule,
l'étape de réception de capteur de véhicule comprenant
- positionner le ressort à fil métallique (3) de telle sorte qu'une partie d'emplacement de ressort (3d, 3e, 3f, 3g) du ressort en fil métallique (3) et des parties d'emplacement de support (2d, 2e, 2f, 2g) du support (2) sont positionnées pour recevoir le capteur de véhicule (1), et
l'étape de fixation de capteur de véhicule comprenant
- positionner le ressort à fil métallique (3) de telle sorte que la partie de barrette à ressort (3h, 3i, 3j, 3k) du ressort en fil métallique (3) est fixée sur une partie de crochet de support (2h, 2i, 2j, 2k) du support (2) et de telle sorte que la partie d'emplacement de ressort (3d, 3e, 3f, 3g) et les parties d'emplacement de support (2d, 2e, 2f, 2g) sont positionnées pour être fixées sur le capteur de véhicule (1), **caractérisé en ce que**
le capteur de véhicule (1) a un boîtier avec au moins une cheville cylindrique, et **en ce que** les parties d'emplacement de support (2d, 2e, 2f, 2g) incluent deux projections s'étendant de la première surface principale avec des blocs en L ayant une surface de support pour supporter une force qui est dirigée perpendiculairement à la première surface principale du support et une support de blocage pour supporter une force qui est dirigée parallèlement à la première surface principale, le boîtier de capteur étant fixé sur l'unité de support (5) de telle sorte que l'au moins une cheville cylindrique du boîtier de capteur est pressée par la partie d'emplacement de ressort contre la surface de support et contre la surface de blocage du bloc en L des parties d'emplacement de support (2d, 2e, 2f, 2g) du support (2), dans l'état fixé.
